# EUROPEAN PATENT SPECIFICATION

(11) **EP 1 345 766 B1**
(45) Date of publication and mention of the grant of the patent: **03.11.2004**
(21) Application number: 01272220.3
(22) Date of filing: 24.12.2001
(51) Int. Cl.: B32B 31/16, B32B 3/26, B31F 1/00, B31F 1/20, B31D 5/02

(54) **METHOD AND MACHINE FOR FABRICATING A LAMINAR ELEMENT**
VERFAHREN UND VORRICHTUNG ZUR HERSTELLUNG EINES SCHICHTELEMENTES
PROCEDE ET MACHINE DE FABRICATION D'UN ELEMENT LAMINAIRE

(30) Priority: 26.12.2000 ES 200003105
(43) Date of publication of application: 24.09.2003
(73) Proprietor: 2t-Pack, S.L., 08292 Esparregura (ES)
(72) Inventor: TEIXIDOR CASANOVAS, Jaume, E-8292 Esparreguera (ES)
(74) Representative: Ponti Sales, Adelaida
(86) International application number: PCT/IB2001/002720
(87) International publication number: WO 2002/051635

(56) References cited:
- WO-A-99/33645
- DE-A- 1 511 281
- FR-A- 970 681

## Description

This invention relates to a method for fabricating a laminar element and a machine for fabricating it.

### BACKGROUND OF THE INVENTION

Known in the art are various laminar elements which include cavities for different applications, such as for holding foods.

Usually for the transportation of foods in cardboard boxes, mainly fruit, a number of trays are used, which trays are provided with a plurality of cavities in which are placed the fruits to be transported. This type of trays are usually known as alveolar trays.

Most of the currently known alveolar trays are made of plastic, and they have the disadvantage that they are not very ecological, since recycling them is not very profitable. These plastic alveolar trays are manufactured by thermoforming.

Also currently known is another type of alveolar trays that do not have ecological disadvantages, which are manufactured from paper pulp. The method for fabricating this type of trays includes a pressing stage with a mould to eliminate the water from the paper pulp, after which the paper pulp is placed in an oven until the tray has been formed into the desired shape.

This type of alveolar trays has the disadvantage of being excessively expensive and the process for fabricating them very slow, which results in low manufacturing productivity.

An alveolar tray, together with the machine and the fabrication method was disclosed in patent WO 99/33645, by the same holder as in this application, in order to resolve these disadvantages.

The alveolar tray disclosed in this patent includes a plurality of cavities which are formed from a number of star-shaped cuts made in the layers of cardboard which make up the tray and from a circular split also made in said layers.

In the method disclosed in that patent the sheets which form the laminar element are attached to each other before the stamping phase, which limits the thickness of the layers which compose it.

Moreover, this method is carried out by means of alternating cycles, that is, each operation is carried out with the material at a standstill. That non-continuous fabricating method means that there is little precision in placement of the layers of sheet material.

That alveolar tray managed to resolve the disadvantages mentioned above, but it was found that the laminar element formed by said tray was not suitable for other applications requiring greater strength.

Also known is the use of corrugated board for different applications. The corrugated board known at present comprises a single layer of corrugated profile, a smooth upper layer and a lower layer which is also smooth.

The currently known method for fabricating corrugated board includes a stage of hot-stamping of the board. It is essential that the board be at a high temperature so that it softens sufficiently for it to acquire its characteristic shape.

The stamping is carried out on cogwheels of large size, and when the board is placed on these cogwheels it acquires a totally smooth layer so that it maintains its corrugated shape, for if not the previously corrugated layer of board would return to its flat shape when it was withdrawn from the cogwheel.

The corrugated board currently used therefore has the disadvantage that the corrugated layer has to be of low thickness in order to stamp it, which stamping must, furthermore, be carried out hot, which increases its fabricating cost.

### DESCRIPTION OF THE INVENTION

The object of the invention is to resolve the above mentioned disadvantages.

This object is achieved by a method according to claim 1 and by a machine according to claim 9.

The dependent claims are related to further advantageous aspects of the present invention.

The method of this invention for fabricating a laminar element which includes cavities and/or undulations includes the stages of gluing of a plurality of layers of sheet material; and stamping of all the layers together by stamping means which include at least one projecting part and one complementary inlet; and it is characterised in that the sticking together of the previously glued zones is carried out at the same time as the stamping of all the layers.

Advantageously, the gluing and stamping of the layers is carried out in a continuous and synchronised manner.

The method of this invention can also include a pre-die-cutting stage of said plurality of layers of sheet material, with a number of cuts being made in said layers.

Advantageously the pre-die-cutting of said plurality of layers of sheet material is also carried out continuously and synchronised with the other stages.

If desired, and depending on the end product to be produced, in the pre-die-cutting stage a number of fold-lines can also be made on said layers.

The method of this invention also includes a final stage of cutting of all the layers together.

The method can also include a stage of drawing of all the layers together, if wished. In this case, said drawing stage is carried out before the gluing, and the layers are separated in order to glue them.

According to a second aspect, the machine of this invention includes:
- a plurality of gluing stations for the layers of sheet material; and
- a stamping station, in which all the layers together are stamped, which comprises at least one projecting part and one complementary inlet; and
it is characterised in that:
- said stamping station includes a pair of pressing elements, which stamp and glue together said previously glued layers.

Advantageously, said gluing stations are adhesive-spraying stations.

The machine of this invention can also include a plurality of pre-die-cutting stations, on which a number of cuts and/or fold-lines are made on the layers of sheet material.

Preferably, said pre-die-cutting stations include a pair of rollers which are synchronised with each other.

Advantageously, the machine of this invention also includes a cutting station situated downstream of the stamping station.

According to two alternative embodiments, said pressing elements are rollers provided with at least one projecting part and one complementary inlet or they are cogged belts.

Advantageously, one of said pressing elements is of a deformable material with the pressure, e.g. foam. This way, said pressing elements adapt automatically to any thickness.

If so wished, the machine of this invention can also include a station for drawing of all the layers of sheet material together.

In this case, the drawing station is situated upstream of the gluing stations, and said gluing stations include a separating station associated with them, which permits separation of the layers from each other for gluing them.

The machine and the method of this invention achieves higher fabricating output of the laminar element, as it is carried out continuously and maintaining a constant tension in all the layers which form the laminar element. A perfect synchronisation of all stations of the machine and of all stages of the fabricating method is also achieved, permitting correct positioning of the flaps which form the cavities of the laminar element.

Moreover, a laminar element can be formed with cavities or corrugations of any desired shape, without limitation on the thickness of the layers.

It also permits the process to be carried out cold, thereby achieving a significant saving in fabrication costs.

Furthermore, the laminar element retains memory of its shape, so that placement of the smooth layer as in the case of the present corrugated board is not necessary during its fabricating process.

### BRIEF DESCRIPTION OF THE DRAWINGS

For a better understanding of all that has been set out, some drawings are attached which show, schematically and solely by way of non-restrictive example, a practical case of embodiment.
Figure 1 is a schematic view of a first embodiment of the machine of this invention;
Figure 2 is a schematic view of a second embodiment of the machine of this invention;
Figure 3 is a schematic view of a third embodiment of the machine of this invention;
Figure 4 is a schematic view of a fourth embodiment of the machine of this invention;

### DESCRIPTION OF PREFERRED EMBODIMENTS

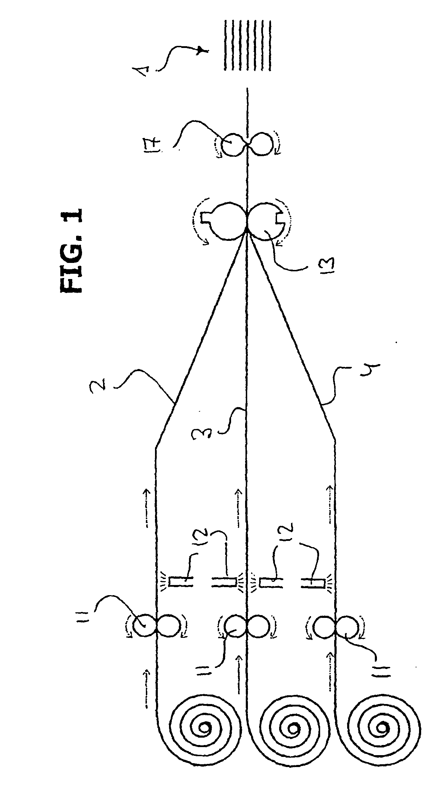

Figures 1 to 4 show alternative embodiments of the machine of this invention. In the first place, it should be stated that in these embodiments machines are shown for the fabricating of laminar elements which include cavities and/or undulations, generally indicated with number reference 1, formed by three layers 2, 3 and 4. It is nevertheless evident that the laminar element 1 of this invention can be formed from two or more layers of sheet material.

According to the embodiment shown in Figure 1, the machine of this invention includes:
- three pre-die-cutting stations 11, in which a number of cuts and/or fold-lines are made in the layers of sheet material 2, 3, 4;
- four gluing stations 12 of the layers of sheet material 2, 3, 4; and
- one stamping station 13, in which all the layers 2, 3, 4 are stamped together; and
- a cutting station 17, in which the laminar elements 1 are cut individually.

According to the embodiment shown in the figures, said pre-die-cutting stations 11 include a pair of rollers which are synchronised with each other, in such a way that the pre-die-cutting of the layers 2, 3, 4 is carried out continuously.

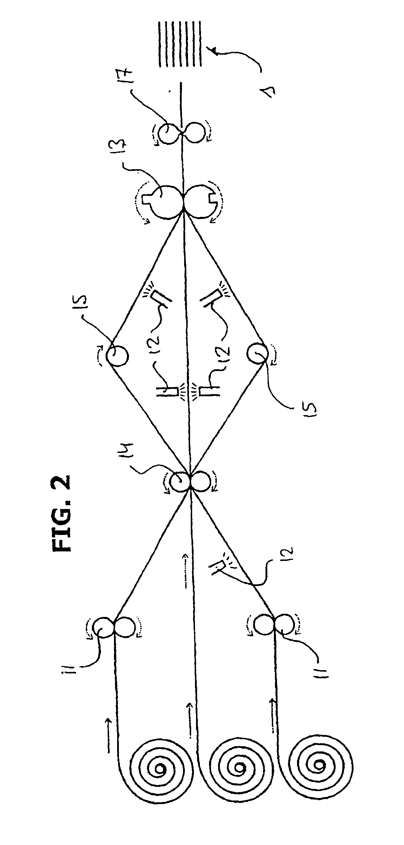

Moreover, said gluing stations 12 are stations for spraying of the glue, and said stamping stations 13 of Figures 1 and 2 include a pair of rollers, so that the stamping of the layers 2, 3, 4 is carried out continuously, with sticking together of the previously glued zones also being carried out.

For its part, the cutting station 17 also includes a pair of rollers each provided with a cutter, which cut the laminar element 1 individually.

The embodiment of the machine of this invention of Figure 2 also includes a drawing station 14 of all the layers of sheet material 2, 3, 4 together.

The drawing station 14 is situated upstream of the gluing stations 12, including also a separating station 15 associated with the gluing stations 12, which permits separation of the layers 2, 3, 4 from each other in order to glue them.

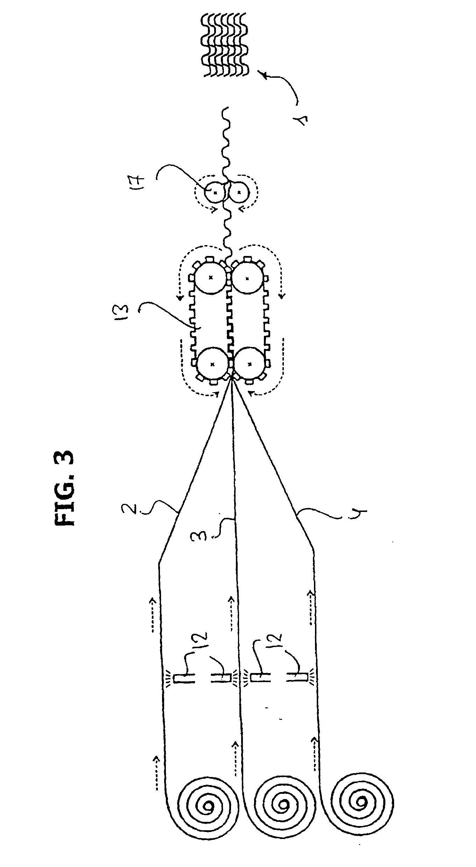

In the embodiment of the machine of this invention shown in Figure 3 the pre-die-cutting station has been eliminated, since it is not necessary for the fabricating of, for example, laminar elements which have a sinusoidal profile. In this case, the undulations will run transversally with respect to the direction of advance of the layers 2, 3, 4.

The other difference from the machine of Figure 3 is that the stamping station 13 is formed by a pair of cogged belts, on which said sinusoidal profile is formed.

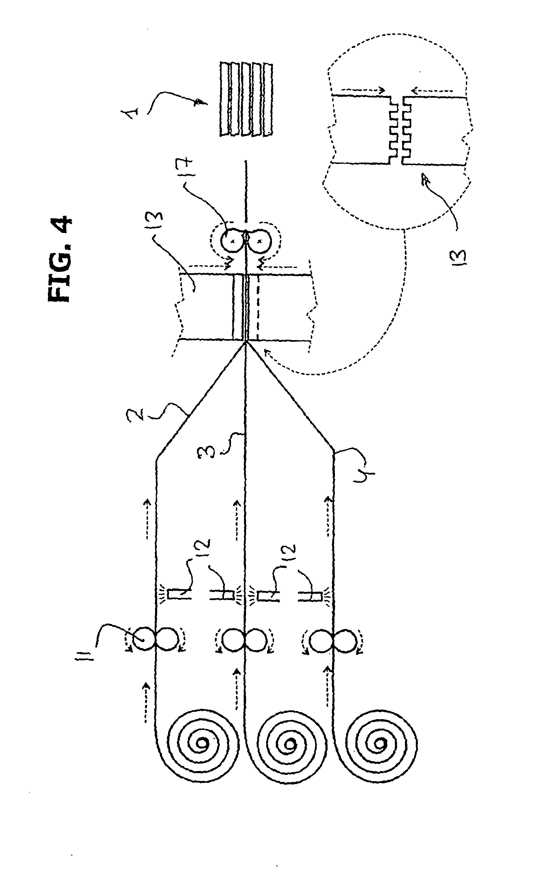

The machine of Figure 4 is also designed for fabricating a laminar element of sinusoidal profile 1. In this case, unlike the embodiment of Figure 3, the undulations will run longitudinally with respect to the direction of advance of the layers 2, 3, 4.

In this embodiment, the machine does include a pre-die-cutting station 11 for making the cuts, which can be seen in Figures 13 to 15.

The stamping station 13 is formed by a pair of complementary plates provided with a number of complementary projections and inlets, as can be seen in the detail of Figure 4.

If wished, the feeding of the layers of sheet material can be made at different speeds, if it is desired to feed more material of one of said layers. This is specially important when a sinusoidal profile laminar material is made, since the inferior layer needs more material.

The method of this invention includes the following stages:
- gluing of said layers of sheet material 2, 3, 4;
- stamping of all the layers 2, 3, 4 together for the formation of cavities or undulations, together with gluing together of all the layers 2, 3, 4, to which glue had previously been applied; and
- cutting of the set of all the layers 2, 3, 4 glued together and stamped.

In the method of this invention the pre-die-cutting, gluing, stamping and cutting of the layers 2, 3, 4 is carried out continuously and in a synchronised manner.

If necessary, the method of this invention also includes a prior stage of pre-die-cutting of a plurality of layers of sheet material 2, 3, 4, in which a number of cuts and/or fold-lines are made on said layers.

The method can also include a stage of drawing of all the layers of sheet material 2, 3, 4 together, which can be carried out before the gluing, with the sheets having to be separated in order to glue them.

The sticking together of the glued zones is carried out at the same time as the stamping of all the layers on said stamping station 13.

The machine and the method of this invention achieve a high production rate thanks to the pre-die-cutting, gluing and stamping being carried out continuously and in synchronisation. In order to achieve correct fabrication of the laminar element of this invention the synchronisation of all the components of the machine is very important.

Despite the fact that reference has been made to one specific embodiment of the invention, it will be clear to a person skilled in the art that the machine and the method described allow of numerous variations and modifications, and that all the details mentioned may be replaced by others that are technically equivalent, without departing from the scope of protection defined by the attached claims.

## Claims

1. Method for fabricating a laminar element (1) which includes cavities and/or undulations, which includes the stages of:
- gluing of a plurality of layers of sheet material (2, 3, 4)); and
- stamping of all the layers (2, 3, 4) together by stamping means which include at least one projecting part and one complementary inlet;
**characterised in that**:
- the sticking together of the previously glued zones is carried out at the same time as the stamping of all the layers (2, 3, 4).

2. Method as claimed in Claim 1, **characterised in that** the gluing and stamping of the layers (2, 3, 4) is carried out in a continuous and synchronised manner.

3. Method as claimed in Claim 1, **characterised in that** it includes a pre-die-cutting stage of said plurality of layers of sheet material (2, 3, 4), with a number of cuts being made in said layers.

4. Method as claimed in Claim 3, **characterised in that** the pre-die-cutting of said plurality of layers of sheet material (2, 3, 4) is also carried out continuously and synchronised with the other stages.

5. Method as claimed in Claim 3, **characterised in that** in the pre-die-cutting stage a number of fold-lines are also made on said layers (2, 3, 4).

6. Method as claimed in Claim 1, **characterised in that** it also includes a final stage of cutting of all the layers (2, 3, 4) together.

7. Method as claimed in Claim 1, **characterised in that** it includes a stage of drawing of all the layers (2, 3, 4) together.

8. Method as claimed in Claim 7, **characterised in that** said drawing stage is carried out before the gluing, and **in that** the layers (2, 3, 4) are separated in order to glue them.

9. Machine for fabricating a laminar element (1) which includes cavities and/or undulations made up of a plurality of layers of sheet material, which includes:
- a plurality of gluing stations (12) for the layers of sheet material (2, 3, 4); and
- a stamping station (13), in which all the layers (2, 3, 4) together are stamped, which comprises at least one projecting part and one complementary inlet;
**characterised in that**:
- said stamping station (13) includes a pair of pressing elements, which stamp and glue together said previously glued layers.

10. Machine as claimed in Claim 9, **characterised in that** said gluing stations (12) are adhesive-spraying stations.

11. Machine as claimed in Claim 9, **characterised in that** it also includes a plurality of pre-die-cutting stations (11), on which a number of cuts and/or fold-lines are made on the layers of sheet material (2, 3, 4).

12. Machine as claimed in Claim 11, **characterised in that** said pre-die-cutting stations (11) include a pair of rollers which are synchronised with each other.

13. Machine as claimed in Claim 9, **characterised in that** it also includes a cutting station (17) situated downstream of the stamping station (13).

14. Machine as claimed in Claim 9, **characterised in that** said pressing elements are rollers provided with at least one projecting part and one complementary inlet.

15. Machine as claimed in Claim 9, **characterised in that** said pressing elements are cogged belts.

16. Machine as claimed in claim 9, **characterised in that** one of said pressing elements is of a deformable material with the pressure.

17. Machine as claimed in claim 16, **characterised in that** said deformable material with the pressure is foam.

18. Machine as claimed in Claim 9, **characterised in that** it also includes a station (14) for drawing of all the layers of sheet materials (2, 3, 4) together.

19. Machine as claimed in Claim 18, **characterised in that** the drawing station (14) is situated upstream of the gluing stations (12), and **in that** said gluing stations (12) include a separating station (15) associated with them, which permits separation of the layers (2, 3, 4) from each other for gluing them.

## Patentansprüche

1. Verfahren zum Herstellen eines Hohlräume und/oder Wellenformen enthaltenden Lamellenelements (1), welches die folgenden Schritte enthält:
- Kleben einer Vielzahl an Schichten aus einem bahnförmigen Material (2, 3, 4); und
- Prägen aller Schichten (2, 3, 4) zugleich durch eine Prägevorrichtung, welche zumindest ein hervorstehendes Teil und einen komplementären Einlass enthält;
**dadurch gekennzeichnet, dass**
- das Verkleben der zuvor geklebten Bereiche zur gleichen Zeit wie das Prägen aller Schichten (2, 3, 4) ausgeführt wird.

2. Verfahren nach Anspruch 1, **dadurch gekennzeichnet, dass** das Kleben und das Prägen der Schichten (2, 3, 4) auf kontinuierliche und synchronisierte Weise ausgeführt wird.

3. Verfahren nach Anspruch 1, **dadurch gekennzeichnet, dass** es einen Schritt des Vorstanzens der Vielzahl an Schichten aus einem bahnförmigen Material (2, 3, 4) enthält, wobei eine Anzahl an Einschnitten in die Schichten geschnitten wird.

4. Verfahren nach Anspruch 3, **dadurch gekennzeichnet, dass** das Vorstanzen der Vielzahl an Schichten aus einem bahnförmigen Material (2, 3, 4) auch kontinuierlich und mit anderen Schritten synchronisiert ausgeführt wird.

5. Verfahren nach Anspruch 3, **dadurch gekennzeichnet, dass** beim Schritt des Vorstanzens auch eine Anzahl an Falzlinien auf den Schichten (2, 3, 4) hergestellt wird.

6. Verfahren nach Anspruch 1, **dadurch gekennzeichnet, dass** es auch einen Endschritt zum gemeinsamen Schneiden aller Schichten (2, 3, 4) enthält.

7. Verfahren nach Anspruch 1, **dadurch gekennzeichnet, dass** es einen Schritt des gemeinsamen Ziehens aller Schichten (2, 3, 4) enthält.

8. Verfahren nach Anspruch 7, **dadurch gekennzeichnet, dass** der Schritt des Ziehens vor dem Kleben ausgeführt wird, und dass die Schichten (2, 3, 4) zum Kleben derselben getrennt werden.

9. Maschine zum Herstellen eines Lamellenelements (1), welches Hohlräume und/oder Wellenformen, welche aus einer Vielzahl an Schichten aus einem bahnförmigen Material bestehen, und Folgendes enthält:
- eine Vielzahl an Klebestationen (12) für die Schichten aus einem bahnförmigen Material (2, 3, 4); und
- eine Prägestation (13), in welcher alle Schichten (2, 3, 4) gemeinsam geprägt werden und welche zumindest ein hervorstehendes Teil und einen komplementären Einlass aufweist;
**dadurch gekennzeichnet, dass**
- die Prägestation (13) ein Paar an Presselementen enthält, welches die zuvor geklebten Schichten zugleich prägt und klebt.

10. Maschine nach Anspruch 9, **dadurch gekennzeichnet, dass** die Klebestationen (12) Stationen zum Aufsprühen des Klebstoffs sind.

11. Maschine nach Anspruch 9, **dadurch gekennzeichnet, dass** sie auch eine Vielzahl an Stationen (11) zum Vorstanzen enthält, auf welchen eine Anzahl an Einschnitten und/oder Falzlinien auf den Schichten aus einem bahnförmigen Material (2, 3, 4) hergestellt werden.

12. Maschine nach Anspruch 11, **dadurch gekennzeichnet, dass** die Stationen (11) zum Vorstanzen ein aufeinander abgestimmtes Walzenpaar enthalten.

13. Maschine nach Anspruch 9, **dadurch gekennzeichnet, dass** sie auch eine Scheidestation (17) enthält, welche der Prägestation (13) nachgeschaltet ist.

14. Maschine nach Anspruch 9, **dadurch gekennzeichnet, dass** die Presselemente Walzen sind, welche mit mindestens einem hervorstehenden Teil und einem komplementären Einlass versehen sind.

15. Maschine nach Anspruch 9, **dadurch gekennzeichnet, dass** die Presselemente Zahnriemen sind.

16. Maschine nach Anspruch 9, **dadurch gekennzeichnet, dass** eines der Presselemente aus einem einen Druck ausübenden, verformbaren Material ist.

17. Maschine nach Anspruch 16, **dadurch gekennzeichnet, dass** das einen Druck ausübende, verformbare Material Schaum ist.

18. Maschine nach Anspruch 9, **dadurch gekennzeichnet, dass** sie auch eine Station (14) zum gemeinsamen Ziehen aller Schichten aus einem bahnförmigen Material (2, 3, 4) enthält.

19. Maschine nach Anspruch 18, **dadurch gekennzeichnet, dass** die Ziehstation (14) den Klebestationen (12) vorgeschaltet ist, und dass die Klebestationen (12) eine denselben zugeordnete Trennstation (15) enthalten, welche die Trennung der Schichten (2, 3, 4) voneinander zum Kleben derselben zulässt.

## Revendications

1. Procédé de fabrication d'un élément feuilleté (1) comportant des cavités et/ou des ondulations, ledit procédé comprenant les 5 étapes consistant à:
- encoller une pluralité de couches d'une matière en feuille (2, 3, 4); et
- poinçonner toutes les couches (2, 3, 4) les unes avec les autres à l'aide d'un moyen de d'estampage comprenant au moins une partie saillante (10) et un enfoncement complémentaire;
**caractérisé en ce que**:
- le collage les unes aux autres des zones préalablement encollées est exécuté en même temps que l'estampage de toutes les couches (2, 3, 4).

2. Procédé selon la revendication 1, **caractérisé en ce que** l'encollage et l'estampage des couches (2, 3, 4) sont exécutés d'une façon continue et synchronisée.

3. Procédé selon la revendication 1, **caractérisé en ce qu'**il comprend une étape de pré-découpage à l'emporte-pièce de ladite pluralité de couches de matière en feuille (2, 3, 4) en pratiquant un certain nombre de découpes dans lesdites couches.

4. Procédé selon la revendication 3, **caractérisé en ce que** le pré-découpage à l'emporte-pièce de ladite pluralité de couches de matière en feuille (2, 3, 4) est également exécuté d'une façon continue et synchronisée avec d'autres étapes.

5. Procédé selon la revendication 3, **caractérisé en ce que** dans l'étape de pré-découpage à l'emporte-pièce, un certain nombre de lignes de pliage sont également pratiquées sur lesdites couches (2, 3, 4).

6. Procédé selon la revendication 1, **caractérisé en ce qu'**il comprend en outre une étape finale de coupage de toutes les couches (2, 3, 4) ensemble.

7. Procédé selon la revendication 1, **caractérisé en ce qu'**il comprend une étape d'emboutissage de toutes les couches (2, 3, 4) ensemble.

8. Procédé selon la revendication 7, **caractérisé en ce que** ladite étape d'emboutissage est exécutée avant l'encollage, et **en ce que** les couches (2, 3, 4) sont séparées en vue de les encoller.

9. Machine pour fabriquer un élément feuilleté (1) comportant des cavités et/ou des ondulations et fait avec une pluralité de couches d'une matière en feuille, comprenant:
- une pluralité de stations d'encollage (12) pour les couches de la matière en feuille (2, 3, 4); et
- une station d'estampage (13), dans laquelle toutes les couches (2, 3, 4) sont estampées ensemble, comprenant au moins une partie saillante et un enfoncement complémentaire;
**caractérisée en ce que**:
- ladite station d'estampage (13) comprend une paire d'éléments de pressage, qui estampent et collent les unes aux autres lesdites couches préalablement encollées.

10. Machine selon la revendication 9, **caractérisée en ce que** lesdites stations d'encollage (12) sont des stations de pulvérisation d'adhésif.

11. Machine selon la revendication 9, **caractérisée en ce qu'**elle comprend en outre une pluralité de stations de pré-découpage à l'emporte-pièce (11), dans laquelle un certain nombre de découpes et/ou de lignes de pliage sont pratiquées sur les couches de la matière en feuille (2, 3, 4).

12. Machine selon la revendication 11, **caractérisée en ce que** lesdites stations de pré-découpage à l'emporte-pièce (11) comprennent une paire de rouleaux qui sont synchronisés l'un par rapport à l'autre.

13. Machine selon la revendication 9, **caractérisée en ce qu'**elle comprend en outre une station de coupage (17) située en aval de la station d'estampage (13).

14. Machine selon la revendication 9, **caractérisée en ce que** lesdits éléments de pressage sont des rouleaux comportant au moins une partie saillante et au moins un enfoncement d'entrée complémentaire.

15. Machine selon la revendication 9, **caractérisée en ce que** lesdits éléments de pressage sont des courroies dentées.

16. Machine selon la revendication 9, **caractérisée en ce qu'**un desdits éléments de pressage est constitué d'une matière déformable à la pression.

17. Machine selon la revendication 16, **caractérisée en ce que** ladite matière déformable à la pression est une mousse.

18. Machine selon la revendication 9, **caractérisée en ce qu'**elle comprend en outre une station (14) pour emboutir toutes les couches des matières en feuille (2, 3, 4) ensemble.

19. Machine selon la revendication 18, **caractérisée en ce que** la station d'emboutissage (14) est située en amont des stations d'encollage (12), et **en ce que** lesdites stations d'encollage (12) comprennent une station de séparation (15) qui leur est associée et qui permet une séparation des couches (2, 3, 4) les unes par rapport aux autres dans le but de les encoller.
